# EUROPEAN PATENT APPLICATION

(11) **EP 3 587 463 A1**
(43) Date of publication of application: **01.01.2020**
(21) Application number: 18756884.5
(22) Date of filing: 22.01.2018
(51) Int. Cl.: C08F 290/06, C09D 4/00, C09D 5/02, C09D 7/40, C09D 163/10, C09J 4/00, C09J 11/04, C09J 11/06, C09J 163/10

(54) **CURABLE AQUEOUS RESIN EMULSION COMPOSITION**

(30) Priority: 27.02.2017 JP 2017034995
(71) Applicant: Showa Denko K.K., Tokyo 105-8518 (JP)
(72) Inventor: KUWAHARA, Jun, Tokyo 105-8518 (JP); NAKAMURA, Kimihiko, Tokyo 105-8518 (JP); MUKUNO, Hidekazu, Tokyo 105-8518 (JP); ARAKI, Motoaki, Tokyo 105-8518 (JP)
(74) Representative: Strehl Schübel-Hopf & Partner
(86) International application number: PCT/JP2018/001714
(87) International publication number: WO 2018/155032

(57) **Abstract**

A curable aqueous resin emulsion composition containing: 100 parts by mass of a (meth)acrylate epoxy resin (a); from 1 to 200 parts by mass of a polymerizable unsaturated monomer (b); from 0.1 to 10 parts by mass of a curing accelerator (c); from 1 to 50 parts by mass of a reactive surfactant (d); from 10 to 2,000 parts by mass of water (e); a radical polymerization initiator (f); and at least one of a component (g) and a component (h) below: (g) at least one selected from inorganic particles and organic particles, and (h) at least one compound selected from an alkoxysilane compound, a metal alkoxy compound, a metal chelate compound, an epoxy compound, an isocyanate compound, and a triazine compound.

## Description

### Technical Field

The present invention relates to a curable aqueous resin emulsion composition that is curable at an ordinary temperature or curable under heat, has good adhesiveness to a base material, and can be applied to coating, adhesion, binder, and the like, a method for producing the same, applications utilizing the curable aqueous resin emulsion composition, and structures obtained through a treatment in the applications.

### Background Art

From the standpoint of the load reduction and the resource saving in the nature and human environments in recent years, it is strongly desired that a solvent type resin composition containing a resin dissolved in an organic solvent is replaced by an aqueous resin composition containing a resin dissolved or dispersed in water.

A synthetic resin emulsion obtained through emulsion polymerization, which is one of the aqueous resin composition, can provide a synthetic resin having a high molecular weight and has good handleability since it can have low viscosity even with a high concentration, and therefore has been widely used in fields including a coating agent, a paint, an ink, an adhesive, a corrosion inhibitor, and a binder agent for fibers and steel wire.

The aqueous resin composition has tended to be inferior in water resistance, chemical resistance, heat resistance, film strength, and hardness, to a solvent type resin composition, particularly to a curable solvent type resin composition (such as an unsaturated polyester resin, an epoxy resin, and a urethane resin), since the introduction of a hydrophilic functional group to the synthetic resin and the use of a large amount of surfactant are necessary for ensuring the stability of the synthetic resin in water, and the stability of the reactive functional group is difficult to retain in water.

For solving the problem, a curable aqueous resin emulsion utilizing a crosslinking technique is proposed.

Specifically, a curable emulsion composition for curing at a high temperature, which contains an epoxy (meth)acrylate resin, a high boiling point polymerizable monomer, a nonionic emulsifier and an anionic emulsifier (provided that both the emulsifiers are non-reactive emulsifiers), a curing agent, and water, has been known (see PTL 1).

However, in the case where curable emulsion composition described in PTL 1 is used, a process of curing through a heat treatment at a high temperature is necessarily employed, and thus the curable emulsion composition cannot be used under situations without a high temperature drying equipment.

As a curable emulsion composition capable of being cured at an ordinary temperature, a curable emulsion composition, which is obtained by mixing an oil-in-water type emulsion containing a polyester acrylate resin, a surfactant, an organic peroxide, and water, and an oil-in-water type emulsion containing a polyester acrylate resin, a curing accelerator, and water, has been known (see PTL 2).

However, it has been found that the curable emulsion composition described in PTL 2 is insufficient in water resistance, acid resistance, and base resistance of the cured film in the use thereof under the condition where the cured film is in contact, for example, with rainwater, industrial wastewater, or the like, since a non-reactive surfactant is used.

Under the circumstances, the present inventors have invented a curable emulsion formed of an oil-in-water type emulsion composition containing a reactive surfactant, a polyester acrylate resin, a polymerizable unsaturated monomer, a curing accelerator, and water (see PTL 3). Curable emulsion resins of an epoxy resin type and a urethane resin type have also been proposed.

### Citation List

### Patent Literatures

PTL 1: JP 05-271366 A
PTL 2: JP 02-036206 A
PTL 3: WO 2014/181731 A1

### Summary of Invention

### Technical Problem

However, the curable resin emulsions of PTL 3 and the others have a problem that adhesion failure to a base material tends to occur as compared to a solvent type resin composition.

Under the circumstances, an object of the present invention is to provide a curable aqueous resin emulsion composition that has sufficient adhesiveness to various base materials, is curable at an ordinary temperature, and can achieve high water resistance, and to provide a treatment method in various applications utilizing the curable aqueous resin emulsion composition, and a structure obtained through the treatment.

### Solution to Problem

As a result of earnest investigations made by the present inventors for solving the problem, it has been found that the curable aqueous resin emulsion composition having the following composition can have sufficient adhesiveness to various base material, can be readily cured at an ordinary temperature, and can achieve high water resistance, and thus the present invention has been completed.

Specifically, the present invention relates to the following items [1] to [13].
[1] A curable aqueous resin emulsion composition containing: 100 parts by mass of a (meth)acrylate epoxy resin (a); from 1 to 200 parts by mass of a polymerizable unsaturated monomer (b); from 0.1 to 10 parts by mass of a curing accelerator (c); from 1 to 50 parts by mass of a reactive surfactant (d); from 10 to 2,000 parts by mass of water (e); a radical polymerization initiator (f); and at least one of a component (g) and a component (h) below:
   (g) at least one selected from inorganic particles and organic particles, and
   (h) at least one compound selected from an alkoxysilane compound, a metal alkoxy compound, a metal chelate compound, an epoxy compound, an isocyanate compound, and a triazine compound.
[2] The curable aqueous resin emulsion composition according to the item [1], wherein the component (h) is at least one selected from an alkoxysilane compound, a metal alkoxy compound, and a metal chelate compound.
[3] The curable aqueous resin emulsion composition according to the item [1] or [2], wherein the inorganic particles of the component (g) are particles of a metal oxide.
[4] The curable aqueous resin emulsion composition according to any one of the items [1] to [3], wherein the organic particles of the component (g) are particles of a thermoplastic resin.
[5] The curable aqueous resin emulsion composition according to any one of the items [1] to [4], wherein a content of the component (g) is 2,000 parts by mass or less relative to 100 parts by mass in total of the components (a) to (d).
[6] The curable aqueous resin emulsion composition according to any one of the items [1] to [5], wherein a content of the component (h) is 20 parts by mass or less relative to 100 parts by mass in total of the components (a) to (d), the component (f), and the component (g).
[7] The curable aqueous resin emulsion composition according to any one of the items [1] to [6], wherein the component (d) is at least one selected from an ionic reactive surfactant and a nonionic reactive surfactant.
[8] The curable aqueous resin emulsion composition according to the item [7], wherein the component (d) contains an ionic reactive surfactant and a nonionic reactive surfactant.
[9] A method for producing the curable aqueous resin emulsion composition according to any one of the items [1] to [8], including: adding dropwise the component (e) to a mixed liquid containing the components (a) to (d) to provide an oil-in-water type emulsion through phase inversion emulsification; and mixing the oil-in-water type emulsion with at least one of the component (g) and the component (h); and the component (f) which have been mixed and dispersed in water in advance to form a water dispersion state.
[10] A coating agent containing the curable aqueous resin emulsion composition according to any one of the items [1] to [8].
[11] An adhesive containing the curable aqueous resin emulsion composition according to any one of the items [1] to [8].
[12] A composition for a binder, containing the curable aqueous resin emulsion composition according to any one of the items [1] to [8].
[13] A structure including the coating agent according to the item [10].
[14] A structure including the adhesive according to the item [11].
[15] A structure including the composition for a binder according to the item [12].

### Advantageous Effects of Invention

The curable aqueous resin emulsion composition of the present invention can be cured at an ordinary temperature and can utilized under situations without a high temperature drying equipment, and thus is industrially advantageous. A cured product (cured coated film) obtained by curing the curable aqueous resin emulsion composition of the present invention is excellent in water resistance, acid resistance, and base resistance, and also is excellent in adhesiveness to various base materials.

Accordingly, the curable aqueous resin emulsion composition of the present invention can be utilized as a coating agent, an adhesive, and a binder for various materials including metals, plastics, concrete, wood, and glass, and can impart water resistance to a structure obtained by coating the composition thereon.

### Description of Embodiments

In the description herein, the preferred provisions may be arbitrarily selected, and a combination of the preferred provisions can be said to be more preferred.

### [Curable Aqueous Resin Emulsion Composition]

The curable aqueous resin emulsion composition of the present invention contains:
100 parts by mass of a (meth)acrylate epoxy resin (a);
from 1 to 200 parts by mass of a polymerizable unsaturated monomer (b);
from 0.1 to 10 parts by mass of a curing accelerator (c);
from 1 to 50 parts by mass of a reactive surfactant (d);
from 10 to 2,000 parts by mass of water (e);
a radical polymerization initiator (f); and
at least one of a component (g) and a component (h) below:
   (g) at least one selected from inorganic particles and organic particles, and
   (h) at least one compound selected from an alkoxysilane compound, a metal alkoxy compound, a metal chelate compound, an epoxy compound, an isocyanate compound, and a triazine compound.

The curable aqueous resin emulsion composition is an oil-in-water type (O/W type) emulsion composition.

The components will be described in detail below.

### (a) (Meth)acrylate Epoxy Resin

The (meth)acrylate epoxy resin as the component (a) is a resin that is obtained by reacting an epoxy resin having two or more epoxy groups in one molecule with an α-β-unsaturated monobasic salt. The "(meth)acrylate epoxy resin" herein means all epoxy resins obtained by reacting an acid having a carbon-carbon double bond at the so-called α-β position, such as acrylic acid, methacrylic acid, and crotonic acid, with an epoxy compound.

Examples of the epoxy resin having two or more epoxy groups in one molecule include a bisphenol type epoxy resin, a novolac type epoxy resin, a halogenated bisphenol type epoxy resin, a halogenated novolac type epoxy resin, a cyanurate type epoxy resin, and a dimer acid-modified epoxy resin. Among these, a bisphenol type epoxy resin, a novolac type epoxy resin, and a halogenated bisphenol type epoxy resin are preferred. These may be produced by known methods, and commercially available products may be used therefor.

Preferred examples of the "bisphenol type" include a bisphenol A type, a bisphenol AP type, a bisphenol B type, a bisphenol BP type, a bisphenol C type, a bisphenol E type, a bisphenol F type, and a bisphenol G type, and a bisphenol A type is more preferred. Herein, bisphenol A means 2,2-bis(4-hydroxyphenyl)propane, bisphenol AP means 1,1-bis(4-hydroxyphenyl)-1-phenylethane, bisphenol B means 2,2-bis(4-hydroxyphenyl)butane, bisphenol BP means bis(4-hydroxyphenyl)diphenylmethane, bisphenol C means 2,2-bis(3-methyl-4-hydroxyphenyl)propane, bisphenol E means 1,1-his(4-hydroxyphenyl)ethane, bisphenol F means bis(4-hydroxyphenyl)methane, and bisphenol G means 2,2-bis(4-hydroxy-3-isopropylphenyl)propane.

The "halogenated" is preferably brominated.

The epoxy resin having two or more epoxy groups in one molecule is preferably an epoxy resin having one epoxy group at each of the both ends of the molecule.

The epoxy equivalent of the epoxy resin having two or more epoxy groups in one molecule is preferably from 130 to 800 g/eq, more preferably from 150 to 600 g/eq, and further preferably from 150 to 400 g/eq.

Examples of the α-β-unsaturated monobasic acid include acrylic acid, methacrylic acid, and crotonic acid. Among these, acrylic acid and methacrylic acid are preferred, and methacrylic acid is more preferred.

The synthesis method of the (meth)acrylate epoxy resin through reaction of the epoxy resin having two or more epoxy groups in one molecule and the unsaturated monobasic acid is not particularly limited, and a known method may be employed. Specifically, such a method may be employed that the epoxy resin having two or more epoxy groups in one molecule and the α-β-unsaturated monobasic acid are mixed to make the epoxy group and the carboxy group being substantially equivalent to each other, and are reacted preferably in the presence of a stabilizer preferably under an air atmosphere, at a temperature of preferably from 80 to 150°C, more preferably from 90 to 140°C, and further preferably from 100 to 140°C, until providing an acid value of preferably 30 mgKOH/g or less, more preferably from 4 to 25 mgKOH/g, and further preferably from 6 to 20 mgKOH/g. With the acid value in the aforementioned range, the emulsion has good stability, and the water resistance can be retained to a high level.

The stabilizer used may be a known polymerization inhibitor. Examples thereof include a hydroquinone compound, such as hydroquinone, methylhydroquinone, trimethylhydroquinone, and t-butylhydroquinone; a thioether compound, such as phenothiazine and distearyl thiodipropionate; a copper salt, such as a copper dialkyldithiocarbamate (wherein the alkyl group may be a methyl group, an ethyl group, a propyl group, or a butyl group), copper acetate, copper salicylate, copper thiocyanate, copper nitrate, copper chloride, copper carbonate, copper hydroxide, and copper acrylate; and a manganese salt, such as a manganese dialkyldithiocarbamate (wherein the alkyl group may be a methyl group, an ethyl group, a propyl group, or a butyl group), manganese diphenyldithiocarbamate, manganese formate, manganese acetate, manganese octanoate, manganese naphthenate, manganese permanganate, and ethylene diamine tetraacetic acid manganese, but are not limited thereto.

The (meth)acrylate epoxy resin may be modified. Examples of the modification include urethane modification, phenol modification, cresol modification, acid modification, acid anhydride modification, acid pendant modification, phosphoric acid pendant modification, silicon modification, aryl ether modification, acetoacetylation modification, and partial esterification modification.

The component (a) may be used alone or as a combination of two or more kinds thereof.

### (b) Polymerizable Unsaturated Monomer

The curable aqueous resin emulsion composition of the present invention contains a polymerizable unsaturated monomer as a component (b).

Examples of the polymerizable unsaturated monomer as the component (b) include an alkyl (meth)acrylate, an alkenyl (meth)acrylate, an alkylene glycol di(meth)acrylate, an alkoxyalkyl (meth)acrylate, a dialkylaminoalkyl (meth)acrylate, acrylonitrile, styrene and a derivative thereof, and a vinyl compound.

Examples of the alkyl (meth)acrylate include methyl (meth)acrylate, ethyl (meth)acrylate, butyl (meth)acrylate, and 2-ethylhexyl (meth)acrylate, and the number of carbon atoms of the alkyl group is preferably from 1 to 10.

Examples of the alkenyl (meth)acrylate include allyl (meth)acrylate, and the number of carbon atoms of the alkenyl group is preferably from 3 to 10, and more preferably from 3 to 8.

Examples of the alkylene glycol di(meth)acrylate include ethylene glycol di(meth)acrylate, and the number of carbon atoms of the alkylene glycol moiety is preferably 2 or 3, and more preferably 2.

Examples of the alkoxyalkyl (meth)acrylate include methoxyethyl (meth)acrylate and butoxyethyl (meth)acrylate, the number of carbon atoms of the alkoxy group is preferably from 1 to 10, and more preferably from 1 to 5, and the number of carbon atoms of the alkyl group is preferably from 1 to 5, and more preferably from 1 to 3.

Examples of the dialkylaminoalkyl (meth)acrylate include dimethylaminoethyl (meth)acrylate and diethylaminoethyl (meth)acrylate, the alkyl groups of the dialkylamino group may be the same as or different from each other, and the number of carbon atoms of the alkyl group is preferably from 1 to 10, more preferably from 1 to 5, and further preferably from 1 to 3. The number of carbon atoms of the alkyl group, on which the dialkylamino group is substituted, bonded to the oxygen atom of the acryloyloxy group is preferably from 1 to 5, and more preferably from 1 to 3.

Examples of the styrene derivative include α-methylstyrene, o-divinylbenzene, m-divinylbenzene, and p-divinylbenzene.

Examples of the vinyl compound include a vinyl ester, such as vinyl acetate and vinyl propionate; and a halogenated vinyl, such as vinylidene chloride.

The polymerizable unsaturated monomer as the component (b) may have a functional group, such as a carboxy group, a hydroxy group, an amino group, and an isocyanato group. Examples thereof include (meth)acrylic acid, hydroxyethyl (meth)acrylate, glycidyl methacrylate, 2-isocyanatoethyl methacrylate, diacetone acrylamide, and triallyl isocyanurate.

Among these, styrene and a derivative thereof, and an alkylene glycol di(meth)acrylate are preferred, styrene and ethylene glycol di(meth)acrylate are more preferred, and styrene and ethylene glycol dimethacrylate are further preferred.

The component (b) has an effect of facilitating the formation of a cured coated film in curing the curable aqueous resin emulsion composition at an ordinary temperature.

The component (b) may be used alone or as a combination of two or more kinds thereof.

The curable aqueous resin emulsion composition of the present invention can be cured at an ordinary temperature, and thus has an advantage that a compound having a low boiling point (for example, less than 200°C, and a further lower one, such as 180°C or less, and 160°C or less) can be used.

The content of the component (b) is from 1 to 200 parts by mass relative to 100 parts by mass of the component (a). In the case where the content thereof is 1 part by mass or more, the curable aqueous resin emulsion composition can be readily cured at an ordinary temperature. In the case where the content thereof is 200 parts by mass or less, the characteristics of the component (b) (such as toughness and flexibility) can be imparted without impairing the mechanical strength of the component (a), providing the synergistic effect.

The content of the component (b) is preferably from 5 to 100 parts by mass, more preferably from 10 to 80 parts by mass, and further preferably from 15 to 75 parts by mass, relative to 100 parts by mass of the component (a).

### (c) Curing Accelerator

The curing accelerator used as the component (c) can accelerate reduction and decomposition of the radical polymerization initiator (f) added in curing the curable aqueous resin emulsion composition of the present invention at an ordinary temperature. Specific examples thereof include a metal acetylacetonate, such as copper acetylacetonate, vanadium acetylacetonate, cobalt acetylacetonate, manganese acetylacetonate, and iron acetylacetonate; a metal soap, such as iron naphthenate, cobalt naphthenate, cobalt octylate, and manganese octylate; a vanadium compound, such as divanadium pentoxide; a metal sulfide, such as cobalt sulfide, copper sulfide, manganese sulfide, nickel sulfide, and iron sulfide; and an amine, such as N,N-dimethylaniline, triethylamine, tripropylamine, tributylamine, ethylene diethanolamine, and N,N-dimethyltoluidine, but are not limited thereto. Among these, a metal soap is preferred, and cobalt octylate is more preferred.

The component (c) may be used alone or as a combination of two or more kinds thereof.

The content of the component (c) is from 0.1 to 10 parts by mass relative to 100 parts by mass of the component (a). In the case where the content thereof is 0.1 part by mass or more, the curable aqueous resin emulsion composition can be readily cured at an ordinary temperature. With a content of the component (c) exceeding 10 parts by mass, the effect of the component (c) may be saturated, and therefore a content thereof of 10 parts or less can suppress the production cost without affecting the curability.

The content of the component (c) is preferably from 0.3 to 7 parts by mass, and more preferably from 0.3 to 5 parts by mass, relative to 100 parts by mass of the component (a).

### (d) Reactive Surfactant

A reactive surfactant is used as the component (d) for suppressing the separation of the surfactant from the resin component, and enhancing the water resistance, the acid resistance, and the base resistance of the cured coated film. The use of a non-reactive surfactant makes the water resistance, the acid resistance, and the base resistance of the cured coated film insufficient. The "reactive" herein means that the surfactant has radical reactivity, and the reactive surfactant preferably has at least one carbon-carbon double bond in the molecule thereof. On the other hand, the "non-reactive" means that the surfactant does not have radical reactivity, and the non-reactive surfactant does not have a carbon-carbon double bond or the like in the molecule thereof.

The reactive surfactant (d) includes an ionic radical surfactant and a nonionic reactive surfactant, and at least one selected therefrom is preferably used. Any one of the ionic radical surfactant and the nonionic reactive surfactant may be used, and it is preferred to use both of them in combination.

The ionic reactive surfactant may be any of an anionic reactive surfactant, a cationic reactive surfactant, and an amphoteric reactive surfactant, which may be selected depending on purposes. An anionic reactive surfactant is preferred from the standpoint of the emulsifiability and the variations of the commercially available products thereof.

Examples of the anionic reactive surfactant include α-sulfo-ω-(1-alkoxymethyl-2-(2-propenyloxy)ethoxy)-poly(oxy-1,2-ethandiyl) ammonium salt (Adeka Reasoap (trade name) SR-10, SR-1025, and the like, manufactured by Adeka Corporation), α-sulfo-ω-(1-(nonylphenoxy)methyl-2-(2-propenyloxy)ethoxy)-poly(oxy-1,2-ethandi yl) ammonium salt (Adeka Reasoap (trade name) SE-10, SE-1025A, and the like, manufactured by Adeka Corporation), polyoxyethylene alkylpropenyl propenyl ether sulfate ester ammonium salt (Aqualon (trade name) HS-10, HS-5, BC-10, BC-5, and the like, manufactured by DKS Co., Ltd.), α-sulfonato-ω-(1-(allyloxymethyl)-allyloxy) polyoxyethylene ammonium salt (Aqualon (trade name) KH-10 and the like, manufactured by DKS Co., Ltd.), polyoxyalkylene alkenyl ether sulfuric acid ammonium salt (Latemul (trade name) PD-104 and the like, manufactured by KAO Corporation), alkylallylsulfosuccinate salt (Latemul (trade name) S-180A, S-180, and the like, manufactured by KAO Corporation), and Eleminol (trade name) JS-20, manufactured by Sanyo Chemical Industries, Ltd., but are not limited thereto.

Among these, α-sulfo-ω-(1-alkoxymethyl-2-(2-propenyloxy)ethoxy)-poly(oxy-1,2-ethandiyl) ammonium salt (Adeka Reasoap (trade name) SR-10, SR-1025, and the like, manufactured by Adeka Corporation) is preferred from the standpoint of the water resistance, the acid resistance, and the base resistance of the cured coated film.

Examples of the nonionic reactive surfactant include α-hydro-ω-(1-alkoxymethyl-2-(2-propenyloxy)ethoxy-poly(oxy-1,2-ethandiyl)) (Adeka Reasoap (trade name) ER-10, ER-20, ER-30, and ER-40, manufactured by Adeka Corporation), polyoxyalkylene alkenyl ether (Latemul (trade name) PD-420, PD-430, and PD-450, manufactured by KAO Corporation), polyoxyethylene alkyl propenyl phenyl ether (Aqualon (trade name) RN20, RN30, and RN50, manufactured by DKS Co., Ltd.), but are not limited thereto.

Among these, α-hydro-ω-(1-alkoxymethyl-2-(2-propenyloxy)ethoxy-poly(oxy-1,2-ethandiyl)) (Adeka Reasoap (trade name) ER-10, ER-20, ER-30, and ER-40, manufactured by Adeka Corporation) is preferred from the standpoint of the water resistance, the acid resistance, and the base resistance of the cured coated film.

In addition, the known anionic reactive surfactants and nonionic reactive surfactants described in JP 62-104802 A, JP 63-23725 A, and JP 63-240931 A may also be used.

In the case where an ionic reactive surfactant (particularly an anionic reactive surfactant) and a nonionic reactive surfactant are used in combination, the content of the nonionic reactive surfactant in the component (d) is preferably 80% by mass or more, and more preferably 90% by mass or more.

The content of the component (d) is from 1 to 50 parts by mass relative to 100 parts by mass of the component (a). In the case where the content thereof is 1 part by mass or more, the stability of the emulsion is enhanced. In the case where the content thereof is 50 parts by mass or less, the inhibition of curing and the reduction of the water resistance due to the component (d) can be suppressed.

The content of the component (d) is preferably from 2 to 45 parts by mass, more preferably from 2 to 40 parts by mass, further preferably from 2 to 35 parts by mass, and particularly preferably from 2 to 30 parts by mass, relative to 100 parts by mass of the component (a).

A non-reactive surfactant may be used in combination with the reactive surfactant as the component (d). In the case where a non-reactive surfactant is used in combination, the amount thereof is preferably 80 parts by mass or less, more preferably 50 parts by mass or less, further preferably 30 parts by mass or less, and particularly preferably 10 parts by mass or less, relative to 100 parts by mass of the component (d).

Examples of the non-reactive surfactant used include known anionic surfactant, cationic surfactant, amphoteric surfactant, and nonionic surfactant that are non-reactive.

Examples of the non-reactive anionic surfactant include a higher alcohol sulfate ester salt, such as sodium lauryl sulfate; an alkylbenzene sulfonate salt, such as sodium dodecylbenzene sulfonate; an alkylnaphthalene sulfonate salt; a potassium alkenylsuccinate; a dialkylsulfosuccinate salt; a partially hydrogenated tallowate salt, such as potassium partially hydrogenated tallowate; an alkyl diaryl ether disulfonate salt, such as sodium alkyl diphenyl ether disulfonate; a sulfate ester salt of a polyoxyalkylene alkyl ether, such as a sulfate ester of polyoxyethylene alkyl ether; a sulfate ester salt of a polyoxyalkylene alkyl aryl ether, such as a sulfate ester salt of polyoxyethylene alkyl phenyl ether; a polyoxyalkylene alkyl ether acetate salt, such as sodium polyoxyethylene lauryl ether acetate; sodium lauroylsarcosine, sodium N-lauroylmethyltaurine, sodium N-cocoylmethyltaurine, and sodium β-naphthalenesulfonate formalin condensate.

Examples of the non-reactive cationic surfactant include an alkylammonium salt, such as dodecylammonium chloride.

Examples of the non-reactive nonionic surfactant include a polyoxyethylene alkyl ether, a polyoxyethylene alkyl allyl ether, a polyoxyethylene alkyl phenyl ether, a polyoxyethylene sorbitan fatty acid ester, a polyoxyethylene sorbitol fatty acid ester, a polyoxyethylene fatty acid ester, a polyoxyethylene acyl ester, a polyoxyethylene hydrogenated sterol, a polyoxyethylene polyoxypropylene alkyl ether, a polyoxyethylene lanolin, a polyoxyethylene lanolin alcohol, a polyoxyethylene lanolin alcohol ether, and a polyoxyethylene lanolin fatty acid ester.

### (e) Water

The water used is preferably pure water, such as ion exchanged water and distilled water, since an ionic component may cause reduction of the stability of the curable aqueous resin emulsion composition.

The oil-in-water type emulsion composition of the present invention contains from 10 to 2,000 parts by mass of water as the component (e) relative to 100 parts by mass of the component (a). The content of the component (e) may be appropriately controlled depending on purposes, and is preferably from 10 to 1,500 parts by mass, and more preferably from 10 to 1,000 parts by mass. In the case where the content thereof is 10 parts by mass or more, the emulsion composition tends to become an oil-in-water type, and the stability of the emulsion can be retained. In the case where the content is 2,000 parts by mass or less, the curing may readily occur.

### (f) Radical Polymerization Initiator

The radical polymerization initiator (f) used may be a radical polymerization initiator that is generally used for curing an unsaturated polyester or a (meth)acrylate epoxy resin. The radical polymerization initiator used is preferably an organic peroxide. Specific examples of the organic peroxide include a ketone peroxide, such as methyl ethyl ketone peroxide, cyclohexanone peroxide, 3,3,5-trimethylcyclohexanone peroxide, and methylcyclohexanone peroxide; a hydroperoxide, such as t-butyl hydroperoxide, cumene hydroperoxide, diisopropylbenzene hydroperoxide, and 2,5-dimethylhexanone-2,5-hydroperoxide; a diacyl peroxide, such as benzoyl peroxide and lauroyl peroxide; and a peroxyester compound, such as t-butyl peroxybenzoate and t-butyl peroxylaurate, but are not limited thereto, and these compounds may be selected depending on the purpose, the temperature condition in the treatment method, the aging time, and the like. For example, in the case of drying at an ordinary temperature, a compound having a 10-hour half life period temperature of from 30 to 170°C is preferred. The radical polymerization initiator may be used alone or as a combination of two or more kinds thereof.

The preferred amount thereof is from 0.1 to 15 parts by mass, and more preferably from 0.5 to 10 parts by mass, relative to 100 parts by mass in total of the components (a) to (d). In the case where the amount is 0.1 part by mass or more, curing failure may not occur. In the case where the amount is 15 parts by mass or less, the reduction of the water resistance and the chemical resistance due to the component (f) can be suppressed.

### (g) Particles

The particles as the component (g) are at least one selected from inorganic particles formed of an inorganic material and organic particles formed of an organic material. The component preferably has a shrinkage rate that is smaller than the volume shrinkage of the components (a) and (b) in curing. The volume shrinkage can be calculated as a change in density before and after curing according to 5.12 of JIS K6901:2008.

In the present invention, the form of the particles is not particularly limited, and may be a powder form, a spherical form, a pulverized form, a fiber form, an acicular form, a scale form, a hollow form, a scale form, or the like. The particles preferably retain the shape thereof at the curing temperature. The average particle diameter of the particles identified by the particle size distribution measurement or a scanning electron microscope, or the length of the shortest axis thereof in the case of a non-spherical form may be from 1 nm to 1 mm, more preferably from 5 nm to 100 µm, and particularly preferably from 10 nm to 50 µm.

Examples of the inorganic particles include a carbonate salt, such as calcium carbonate, magnesium carbonate, and barium carbonate; a sulfate salt, such as calcium sulfate, magnesium sulfate, and barium sulfate; a chloride, such as sodium chloride, calcium chloride, and magnesium chloride; a metal oxide, such as calcium oxide, magnesium oxide, zinc oxide, titanium oxide, silica, and chromium oxide; a silicate salt, such as silica sand, talc, clay, mica, glass, and volcanic soil; and graphite. Among these, metal oxide particles are preferred. The form thereof is not particularly limited, and may be a powder form, a spherical form, a pulverized form, a fiber form, an acicular form, a scale form, a hollow form, or the like.

The organic particles are preferably particles of a resin. Examples thereof include thermoplastic resin particles, such as polystyrene particles, acrylic resin particles, polystyrene-acrylic particles, poly(styrene-vinyl acetate) particles, polyvinyl acetate particles, polyethylene-vinyl acetate particles, and polyester resin particles, and thermosetting resin particles, such as polyurethane particles, epoxy resin particles, and unsaturated polyester resin particles. Among these, thermoplastic resin particles are more preferred, and polystyrene particles, acrylic resin particles, polystyrene-acrylic particles, and polyester resin particles are further preferred. These particles may be used as an aqueous dispersion. The method for forming an aqueous dispersion is not particularly limited, and for example, an emulsion obtained through emulsification of a resin with a surfactant or a water soluble resin, and a self-emulsifying emulsion obtained by imparting a self-emulsifying capability thereto through introduction of a hydrophilic functional group to the resin may be used. The use of organic particles of a resin component having a solubility parameter (SP) value that is close to the base material may enhance the adhesiveness to the base material.

The particles may be used alone or as a combination of two or more kinds thereof. The particles may be selected suitably in consideration of the coating, the adhesion and the purpose of the binder described later.

The preferred amount thereof used is 2,000 parts by mass or less, and more preferably 1,000 parts by mass or less, relative to 100 parts by mass in total of the components (a) to (d). In the case where the amount is 2,000 parts by mass or less, the characteristics of the component (a) and the component (b) can be sufficiently exhibited in the cured coated film, resulting in the water resistance and the chemical resistance.

### (h) Compound

The compound (h) is at least one selected from an alkoxysilane compound, a metal alkoxy compound, a metal chelate compound, an epoxy compound, an isocyanate compound, and a triazine compound. The compound (h) is a compound other than the component (a) and the component (b), and is a substance capable of forming a covalent bond, a coordinate bond, a hydrogen bond, or an ionic bond. Among these, a covalent bond or a coordinate bond is preferably formed. Among these compounds, an alkoxysilane compound, a metal alkoxy compound, and a metal chelate compound are preferred, and an alkoxysilane compound and a metal chelate compound are more preferred.

Examples of the alkoxysilane compound include an alkoxysilane compound having a (meth)acryloxy group, such as 3-(meth)acryloxypropyltrimethoxysilane, 3-(meth)acryloxypropyltriethoxysilane, 3-(meth)acryloxypropyltripropoxysilane, 3-(meth)acryloxypropyltributoxysilane, 3-(meth)acryloxypropylmethyldimethoxysilane, and 3-(meth)acryloxypropylmethyldiethoxysilane;
an alkoxysilane compound having a vinyl group, such as vinyltrimethoxysilane, vinyltriethoxysilane, vinyltriisopropoxysilane, vinyltributoxysilane, vinylmethyldimethoxysilane, and vinylmethyldiethoxysilane; an alkoxysilane compound having an amino group, such as 3-aminopropyltrimethoxysilane, 3-aminopropyltriethoxysilane, 3-aminopropyltripropoxysilane, 3-aminopropylmethyldimethoxysilane, 3-aminopropylmethyldiethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, and N-phenyl-3-aminopropyltrimethoxysilane;
an alkoxysilane having a mercapto group, such as 3-mercaptopropyltrimethoxysilane, 3-mercaptopropyltriethoxysilane, 3-mercaptopropyltripropoxysilane, 3-mercaptopropylmethyldimethoxysilane, and 3-mercaptopropylmethyldiethoxysilane;
an alkoxysilane compound having an epoxy group, such as 3-glycidoxypropyltrimethoxysilane, 3-glycidoxypropyltriethoxysilane, 3-glycidoxypropyltripropoxysilane, 3-glycidoxypropyltributoxysilane, 3-glycidoxypropylmethyldimethoxysilane, 3-glycidoxypropylmethyldiethoxysilane, and 2-(3,4-epoxycyclohexyl)ethyltrimethoxysilane;
a di-, tri-, or tetraalkoxysilane compound, such as tetramethoxysilane, tetraethoxysilane, tetrapropoxysilane, tetrabutoxysilane, tetraisopropyl titanate, tetraisopropyl zirconate, and aluminum sec-butoxide;
3-chloropropyltrimethoxysilane, n-hexyltrimethoxysilane, n-hexyltriethoxysilane, n-decyltrimethoxysilane, n-decyltriethoxysilane, stylyltrimethoxysilane, phenyltrimethoxysilane, diphenyldimethoxysilane, 3-triethoxysilyl-N-(1,3-dimethylbutylidene)propylamine, 1,3,5-tris(3-trimethoxysilylpropyl)isocyanurate, 3-isocyanatopropyltrimethoxysilane, 3-isocyanatopropyltriethoxysilane, hexamethyldisilazane, and a silicone resin having an alkoxysilyl group in the molecule thereof.

Examples of the metal alkoxy compound include an alkoxy compound of a metal, such as titanium, tantalum, zirconium, boron, aluminum, magnesium, and zinc. Among these, a metal alkoxy compound having an alkoxy group having from 1 to 20 carbon atoms is preferred. Specific examples thereof include an alkoxy titanium compound, such as tetraisopropyl titanate, tetra-n-butyl titanate, tetraoctyl titanate, and tetrastearyl titanate; and an alkoxy zirconium compound, such as n-propyl zirconate and n-butyl zirconate. A metal alkoxy compound having an alkoxy group having from 1 to 5 carbon atoms is more preferred since the compound has high reactivity, and the alcohol formed through hydrolysis of the alkoxy group is difficult to remain in the cured coated film.

Examples of the metal chelate compound include a coordinate compound of a polyvalent metal, such as aluminum, iron, copper, zinc, tin, titanium, nickel, antimony, magnesium, vanadium, chromium, and zirconium, with acetylacetone, ethyl acetoacetate, amino alcohol, or the like. Specific examples thereof include aluminum ethylacetoacetate diisopropylate, aluminum trisacetylacetonate, aluminum bisethylacetoacetate monoacetylacetonate, aluminum alkylacetonate diisopropylate, titanium tetraacetylacetonate, titanium ethylacetoacetate, titanium octylene glycolate, titanium triethanolaminate, titanium lactate, titanium lactate ammonium salt, zirconium tetraacetylacetonate, zirconium monoacetylacetonate, and zirconium lactate ammonium salt.

The epoxy compound is a compound that has at least one epoxy group in the molecule thereof. A compound having two or more epoxy groups, and a compound having one or more epoxy group and one or more polar group selected from a hydroxy group, an amino group, and the like are more preferred. Examples of the compound having two or more epoxy groups include ethylene glycol diglycidyl ether, polyethylene glycol diglycidyl ether, glycerol polyglycidyl ether, glycerin triglycidyl ether, 1,3-bis(N,N-diglycidylaminomethyl)cyclohexane, N,N,N',N'-tetraglycidyl-m-xylylenediamine, N,N,N',N'-tetraglycidylaminophenylmethane, triglycidyl isocyanurate, m-N,N-diglycidylaminophenyl glycidyl ether, N,N-diglycidyltoluidine, and N,N-diglycidylaniline. Examples of the compound having one or more epoxy group and one or more polar group include glycidol.

The isocyanate compound is a compound having one or more isocyanato group in the molecule thereof. A compound having two or more isocyanato groups, and a compound having one or more isocyanato group and one or more polar group are more preferred. Examples of the compound having two or more isocyanato groups include an aliphatic diisocyanate compound, such as ethylene diisocyanate, tetramethylene diisocyanate, pentamethylene diisocyanate, hexamethylene diisocyanate, 2-methyl-1,5-pentane diisocyanate, 3-methyl-1,5-pentane diisocyanate, and 2,2,4-trimethyl-1,6-hexamethylene diisocyanate; an alicyclic diisocyanate compound, such as isophorone diisocyanate, cyclopentyl diisocyanate, cyclohexyl diisocyanate, hydrogenated xylylene diisocyanate, hydrogenated tolylene diisocyanate, hydrogenated diphenylmethane diisocyanate, and hydrogenated tetramethylxylene diisocyanate; an aromatic diisocyanate compound, such as phenylene diisocyanate, tolylene diisocyanate, xylylene diisocyanate, naphthylene diisocyanate, diphenyl ether diisocyanate, diphenylmethane diisocyanate, diphenylpropane diisocyanate, 2,4,6-triisocyanatotoluene, 1,3,5-triisocyanatobenzene, and 4,4',4"-triphenylmethane triisocyanate; a trimer of diphenylmethane diisocyanate, polymethylene polyphenyl polyisocyanate, a biuret compound or an isocyanurate compound of hexamethylene diisocyanate or tolylene diisocyanate, a reaction product of trimethylolpropane and tolylene diisocyanate or xylylene diisocyanate (such as a three-molecule adduct of tolylene diisocyanate or xylylene diisocyanate), a reaction product of trimethylolpropane and hexamethylene diisocyanate (such as a three-molecule adduct of hexamethylene diisocyanate), polyether polyisocyanate, and polyester polyisocyanate. Examples of the compound having one or more isocyanato group and one or more polar group include 1H-benzoimidazol-2-yl isocyanate. A blocked compound having an isocyanate group blocked with methyl ethyl ketoxime, dimethylpyrazole, diethyl malonate, or the like is preferred in consideration of the stability of the aqueous system.

The triazine compound is a compound having at least one amino group in the molecule thereof. A compound having two or more amino groups, and a compound having one or more amino group and one or more polar group are more preferred. Examples thereof include an S-triazine derivative, such as guanamine, acetoguanamine, benzoguanamine, melamine, 2,4-diamino-6-methacryloyloxyethyl-S-triazine, 2,4-diamino-6-dihydroxyalkyltriazine, 2,4-diamino-6-triethoxysilanetriazine, 2-vinyl-4,6-diamino-S-triazine, 2-vinyl-4,6-diamino-S-triazine isocyanuric acid adduct, and 2,4-diamino-6-methacryloyloxyethyl-S-triazine isocyanuric acid adduct. The compound having two or more reactive groups may be used solely or as a combination of two or more kinds thereof.

The amount of the compound having two or more reactive groups used is preferably 20 parts by mass or less, and more preferably 10 parts by mass or less, relative to 100 parts by mass in total of the components (a) to (d), the component (f), and the component (g). In the case where the amount thereof is 20 parts by mass or less, the reduction of the mechanical strength can be suppressed.

The total amount of the components (a) to (h) contained in the curable aqueous resin emulsion composition of the present invention may be from 70 to 100% by mass, preferably from 75 to 100% by mass, and particularly preferably from 80 to 100% by mass, based on the absolute amount of the curable aqueous resin emulsion composition.

The curable aqueous resin emulsion composition of the present invention may contain, in addition to the components (a) to (h), a dispersant, an anti-foaming agent, an antiseptic, a pH modifier, a viscosity modifier, a wetting agent, a film forming assistant, a softener, a plasticizer, a coloring pigment, an ultraviolet ray absorbent, an antistatic agent, a rust inhibitor, a water soluble resin, and the like, added thereto in a range that does not impair the effects of the present invention, in consideration of the application to the purposes described later.

Examples of the dispersant include a polycarboxylic acid type polymer surfactant type, such as Demol (trade name, hereinafter the same) P, EP, and ST, and Poiz (trade name) 521 and 530, manufactured by Kao Corporation, and Dispersant 5020 and 5029, and Nopcosperse (trade name) 44-C, manufactured by San Nopco, Ltd.; an aromatic sulfonic acid condensate type, such as Demol N, RN, and SN-B, manufactured by Kao Corporation, and Lomar D, manufactured by San Nopco, Ltd.; a polyoxyalkylene alkyl ether type, such as Emulgen (trade name, hereinafter the same) LS-106, manufactured by Kao Corporation; a polyoxyethylene disulfonated phenyl ether type, such as Emulgen A-60, A-90, and A-500, manufactured by Kao Corporation; a phosphate salt type, such as sodium tripolyphosphate and sodium hexametaphosphate; carboxymethyl cellulose, and polyvinyl alcohol.

Examples of the anti-foaming agent include a silica silicone type, such as Nopco (trade name) 8034L and SN Defoamer 777, manufactured by San Nopco, Ltd.; a metal soap type, such as SN Defoamer 1010; an amide type, such as SN Defoamer 1044 and 5013; a modified silicone type, such as SN Defoamer 399 and 1110; and a silicone compound type, such as SN Defoamer 369.

Examples of the antiseptic include an isothiazoline type, such as methylisothiazolinone, chloromethylisothiazolinone, octylisothiazolinone, dichlorooctylisothiazolinone, and benzisothiazolinone; and a formaldehyde type, such as formalin and benzotriazine.

Examples of the pH modifier include a basic alkali metal compound and an amine compound. Examples of the basic alkali metal compound include a hydroxide, a hydrogen carbonate salt, a carbonate salt, and an organic carboxylate salt of an alkali metal. Examples of the hydroxide of an alkali metal include lithium hydroxide, sodium hydroxide, and potassium hydroxide. Examples of the hydrogen carbonate salt and the carbonate salt include sodium hydrogen carbonate, sodium carbonate, potassium hydrogen carbonate, and potassium carbonate. Examples of the organic carboxylate salt of an alkali metal include sodium acetate, sodium oxalate, and sodium benzoate. Examples of the amine compound include ammonia and dimethylaminoethanol.

The content of the pH modifier is preferably such an amount that controls the pH of the curable aqueous resin emulsion to a range of from 4 to 12, and more preferably such an amount that controls the pH of the aqueous polymer dispersion to a range of from 5 to 10.

Examples of the viscosity modifier include a polycarboxylic acid type, such as Primal (trade name) TT-935, manufactured by Rohm and Haas Company, and Aron (trade name) B-300K, manufactured by Toagosei Co., Ltd.; a urethane bonding type, such as Adekanol (trade name) UH-420 and 751, manufactured by Adeka Corporation, and SN Thickener 640, manufactured by San Nopco, Ltd.; a HEC type, such as hydroxyethyl cellulose and hydroxypropyl cellulose; a starch type, such as soluble starch and dextrin; and a clay type, such as mica and bentonite.

Examples of the wetting agent include an acetylene glycol type, such as Surfynol (trade name) 104 and Dynol (trade name) 604, manufactured by Air Products and Chemicals, Inc.; a fluorine surfactant type, such as Ftergent 100, manufactured by NEOS Co., Ltd.; an anionic surfactant type, such as Nopcowet 50, manufactured by San Nopco, Ltd., and Pelex (trade name) OT-P, manufactured by Kao Corporation; a nonionic surfactant type, such as Dapro (trade name) W-77, manufactured by Elementis plc; and an organic solvent, such as methanol and ethanol.

Examples of the film forming assistant include diethylene glycol monobutyl ether, ethylene glycol monobutyl ether, diethylene glycol diethyl ether, diethylene glycol dibutyl ether, ethylene glycol mono-2-ethylhexyl ether, 2,2,4-trimethyl-1,3-butanediol isobutyrate, diisopropyl glutarate, propylene glycol n-butyl ether, dipropylene glycol n-butyl ether, tripropylene glycol n-butyl ether, dipropylene glycol methyl ether, and tripropylene glycol methyl ether.

Examples of the softener and the plasticizer include a phthalate ester type, such as bis(2-ethylhexyl) phthalate, diisononyl phthalate, diisodecyl phthalate, and dibutyl phthalate; an adipate ester type, such as dioctyl adipate and diisononyl adipate; a phosphoric acid type, such as tricresyl phosphate; a citrate ester type, such as tributyl acetylcitrate; and an epoxidized vegetable oil type, such as an epoxidized soybean oil and an epoxidized linseed oil.

For the coloring pigment, examples of a white pigment include an inorganic pigment, such as zinc oxide, lead white, calcium carbonate, lithopone (a mixture of zinc sulfate and barium sulfate), precipitated barium sulfate, and baryte powder; and an organic pigment, such as polystyrene copolymer particles. Examples of a black pigment include carbon black, examples of a red pigment include lead red and iron oxide red, examples of a yellow pigment include lead yellow and zinc yellow, examples of a blue pigment include ultramarine blue and phthalocyanine blue, and examples of a green pigment include phthalocyanine green. Among these, a pigment that corresponds to the particles (g) is designated as the particles (g).

Examples of the ultraviolet ray absorbent include a benzotriazole type, such as Tinuvin (trade name, hereinafter the same) PS and 900, manufactured by BASF SE; a hydroxyphenyltriazine type, such as Tinuvin 400 and 460; a high molecular weight benzotriazole type, such as UVA-903KT; hydroxybenzophenone, and oxalic anilide.

Examples of the antistatic agent include a cationic surfactant type, such as Electrostripper (trade name, hereinafter the same) QN, a nonionic surfactant type, such as Rheodol (trade name) TW-L120, and an anionic surfactant type, such as Electrostripper PC-3, manufactured by Kao Corporation; a conductive polymer, such as poly(3,4-ethylenedioxythiophene) and polyaniline; polystyrenesulfonic acid, and carbon.

Examples of the rust inhibitor include sodium nitrite, calcium nitrite, benzotriazole, cyclohexylammonium chloride, 2-mercaptobenzotriazole, and benzoylaminocaproic acid.

Examples of the water soluble resin include polyvinyl alcohol, polyvinylpyrrolidone, polyethylene glycol, polypropylene glycol, water soluble ester, water soluble polyurethane, starch, a cellulose compound, such as carboxymethyl cellulose, and polyacrylic acid.

### [Preparation Method of Oil-in-Water Type Emulsion]

The curable aqueous resin emulsion composition of the present invention is not particularly limited, as far as the composition is produced as an oil-in-water type emulsion, and it is preferred that an oil-in-water type emulsion composition is firstly prepared with the components (a) to (e) (which may be hereinafter referred to as a "composition (AE)"), and then the other components are mixed therewith.

The preparation method of the composition (AE) is not particularly limited, as far as an oil-in-water type emulsion composition is obtained. Examples of the method include a method of emulsifying a mixture of the components (a) to (e) with a device capable of providing a high shearing force, such as an ultrasonic irradiation device, a high pressure homogenizer, a disperser, so as to provide the oil-in-water type emulsion, and a method of subjecting the component (e) or a mixture of the components (d) and (e) to a device capable of providing a high shearing force, to which a mixture of the components (a) to (c) or (a) to (d) is added, so as to provide the oil-in-water type emulsion, and a method of providing a mixed liquid by mixing the components (a) to (d), and adding water as the component (e) dropwise to the mixed liquid under stirring to perform phase inversion emulsification. The production can be achieved under stirring with a relatively low shearing force by this method. Furthermore, water is added "dropwise" but not added at one time, thereby converting a so-called W/O type emulsion having an oil phase as a continuous phase gradually to a so-called O/W type emulsion having water as a continuous phase, so as to provide a state where the components (a) to (d) are further finely dispersed in water, which enhances the stability of the emulsion. Accordingly, the amount of the emulsifier can be decreased, and the water resistance, the acid resistance, and the base resistance of the cured coated film can be increased.

The rate of the dropwise addition of water is not particularly limited, as far as it is not too large, and for example, in the production with a scale of 100 g in total of the components (a) and (b), is preferably approximately from 10 to 300 mL/h, and more preferably from 50 to 150 mL/h.

The component (c) is preferably mixed in the production process of the oil-in-water type emulsion from the standpoint of the dispersibility, but may be added in the stage of the preparation of the curable aqueous resin emulsion composition for controlling the curing property.

### [Preparation Method of Curable Aqueous Resin Emulsion Composition]

The preparation method of the curable aqueous resin emulsion composition of the present invention is not particularly limited, as far as the components (a) to (h) and the other components can be homogeneously mixed. For example, the components may be mixed with a disperser, a planetary mixer, a bead mill, or the like, to provide the curable aqueous resin emulsion composition. The order of mixing is also not particularly limited, and it is preferred that the composition (AE) is prepared, and then the components (f) to (h) and the other components are mixed. It is more preferred that the components other than the composition (AE) are sufficiently mixed and dispersed in water, and then mixed with the composition (AE).

The curing starts simultaneously with the addition of the component (f), and therefore it is preferred that the preparation is performed at a temperature range of from 0 to 50°C, more preferably from 0 to 35°C, or the components other than the component (f) are mixed in advance, and the component (f) is added and mixed immediately before use.

The curable aqueous resin emulsion composition of the present invention can be applied to a coating composition, an adhesive composition, and a binder composition, and can provide a structure that has good adhesiveness to various base materials, and is excellent in durability and water resistance.

### [Coating Agent]

A coating agent using the curable aqueous resin emulsion composition of the present invention can be applied, for example, to base materials, such as a metal, a resin molded article, a resin film, a siding board, e.g., a paper-making board, a cement structure, glass, paper, fibers, a nonwoven fabric, wood, and asphalt for road paving or the like, and can be applied to purposes, such as coating directly on the base material, multi-layer coating by recoating, and top-coating on an existing coating.

More specific examples of the applications include:
an anti-corrosion coating, a heat resistant coating, and a coloration coating for a metal, for example, a metal piping member, such as a tank and a valve for storing a chemical, an automobile metal member, such as a brake, an outdoor building, such as a storeroom, and a body of a ship;
a chipping resistant coating for an automobile exterior material;
an anti-scratch coating, a chemical resistant coating, a coloration coating, and a wear resistant coating for an exterior material (resin molded article) of a home electric appliance, such as a television set;
an anti-scratch coating for a PET film, a glass film, and the like;
a base reinforcing coating, a water impermeable coating, a coloration coating, an wear resistant coating, and a graffiti-proof coating for a siding board, such as a paper-making board, an extruded board, a calcium silicate board, a gypsum board, and an ALC board, and wood;
a base reinforcing coating and a neutralization preventing coating for a cement structure, such as a building;
a chemical resistant coating and a repairing coating for a sewage piping and the like;
an anti-scratch coating and an anti-shattering coating for glass;
a printability improving coating, a waterproof coating, a water repellent coating, a moisture proof coating, a matt coating, a luster coating, and coloration coating for coated paper;
a rust inhibiting coating for rust inhibiting paper;
a flame retarding and flame proofing coating, a wear resistant coating, a water repellent coating, an oil repellent coating, an antifouling coating, and an air catalyst treatment coating for fibers; and
a base reinforcing coating, a wear resistant coating, a coloration coating, and a heat shield coating for an indoor cement floor, an asphalt pavement surface and a cement pavement surface of a road, and a roof material, such as slate.

The treatment condition used may be a treatment condition in a known coating method.

Examples of the coating method include spraying, brush coating, roller coating, dipping, air-knife coating, flow coating, roll coating, and gravure coating.

The coating amount is preferably from 1 µm to 2 mm, and more preferably from 10 µm to 1 mm, in terms of wet thickness per one coating.

In the case where the coating amount is 1 µm or more, the curing failure due to oxygen in the air can be avoided with the amounts of the radical polymerization initiator and the curing accelerator that do not affect the physical properties. In the case where the coating amount is 2 mm or less, water remaining due to the skinning in drying can be suppressed.

In drying a thin film, it is preferred to mix the curing accelerator in a relatively larger amount.

The curing condition is preferably from 5 to 200°C, and more preferably from 10 to 150°C. In the case where the curing condition is 5°C or more a suitable curing rate can be obtained to perform the curing favorably. In the case where the curing condition is 200°C or less, the problem due to heat deterioration of the components can be avoided.

### [Adhesive]

An adhesive using the curable aqueous resin emulsion composition of the present invention may be applied to a purpose of adhesion of a base material, such as a metal, a resin molded article, a resin film, a cement structure, glass, paper, fibers, a nonwoven fabric, and a wood material, such as plywood.

More specific examples of the applications include:
adhesion of wallpaper (such as printed paper, a foam board, a resin film, and fibers) to an indoor wall surface (such as wood, a gypsum board, a mortar surface, a heat insulator, and a reinforcing steel;
adhesion between paper sheets of laminated paper, such as a paper pipe;
adhesion between plywood and decorative paper (such as printed paper, a resin film, and fibers) in a decorative board;
adhesion between a cloth and a rubber material or between a cloth and a foamed material in gloves, a bag, shoes, a wet suit, and the like, and adhesion between cloths or between a cloth and a resin film in clothes; and
adhesion of a printed resin film for lamination to a metal, paper, and the like.

The treatment condition used may be a treatment condition in a known adhesion method.

Examples of the coating method of the adhesive composition include spraying, brush coating, roller coating, trowel coating, dipping, air-knife coating, flow coating, roll coating, and gravure coating.

The coating amount is preferably from 1 µm to 1 mm, and more preferably from 10 to 100 µm, in terms of wet thickness per one coating.

In the case where the coating amount is 1 µm or more, the curing failure due to oxygen in the air may be difficult to occur. In the case where the coating amount is 1 mm or less, the curing failure due to water in the adhesive layer may be difficult to occur.

The adhesive composition may be any one or both of the base materials to be adhered.

In the case of the base material that has water permeability, the base materials may be adhered to each other after coating the adhesive composition thereto before drying the water in the adhesive composition. In the case of the base material, through which water cannot permeate or is difficult to permeate, it is desirable that after coating the adhesive composition, the water is evaporated by heat drying at a temperature, at which the adhesive composition is not completely cured, or the like, and then the base materials are adhered to each other in such a state that the adhesive composition has tackiness.

After adhering the base materials, it is preferred to bond the base material under pressure by using roll press or flat press. At this time, the base materials may be bonded under pressure with heating. The base materials may be bonded under pressure at an ordinary temperature. The base materials are preferably bonded under pressure with heating since the coated surfaces of the adhesive can be sufficiently adhered in a short period of time.

### [Composition for Binder]

The composition for a binder using the curable aqueous resin emulsion composition of the present invention can be applied to a purpose of a binder, for example, for fibers, such as cellulose and polyester, inorganic fibers, such as glass, inorganic powder, such as carbon, and inorganic powder, such as calcium carbonate.

More specific examples thereof include:
a wet paper strengthening agent for paper fibers in wet strengthened paper, such as paper currency;
a binder for binding wood fibers in a molded board, such as MDF;
a binder for binding nonwoven fabrics in a nonwoven fabric laminate, such as artificial leather;
a fiber bundling agent for bundling, prevention of raveling, and prevention of scuffing in a spinning process of fibers (such as glass, carbon, acrylic, and polyester);
a binder for binding carbon in a flat heating element and a battery electrode; and
a heat resistance enhancer for a nonwoven fabric.

The treatment condition used may be a known method.

For paper, a nonwoven fabric, and a molded article of fibers or the like, a method of impregnating with the binder composition by dipping, spray coating, or roll coating may be employed. In the impregnation, it is desirable to decrease the viscosity of the binder composition by diluting the composition with water or the like to decrease the concentration of the composition to 70% by mass or less, and more preferably 60% by mass or less. In the case where the concentration is 70% by mass or less, the increase of viscosity of the binder composition due to the water absorption by the base material in impregnation can be suppressed, resulting in favorable impregnation.

For fine fibers, such as wood fibers, wood chips, and powder, e.g., carbon, a method of binding the base material by mixing the base material with the binder composition, followed by molding, may be employed.

The mixing method is not particularly limited, as far as the agglomeration of the base material can be broken, and examples thereof include mixing with a disperser, a planetary mixer, a bead mill, or the like.

Examples of the molding method include such methods as injection into a mold form, press molding, and coating with a roll or bar coater, or the like.

The curing condition after the impregnation and molding is preferably from 5 to 200°C, and more preferably from 10 to 150°C. In the case where the curing condition is 5°C or more, the curing rate may be increased to prevent curing failure from occurring. In the case where the curing condition is 200°C or less, the heat deterioration of the components can be prevented from occurring.

The amount of the binder composition used in terms of the total amount of the components (a) and (b) in the binder composition may be 1 part by mass or more, more preferably 3 parts by mass or more, relative to 100 parts by mass of the base material. In the case where the amount is 1 part by mass or more, the base material can be favorably bound with the binder composition to prevent the base material from being unraveled.

### Examples

The present invention will be described in more detail with reference to examples, but the present invention is not limited to the examples.

### [Production Example 1]

In a reaction vessel, 948 g of a novolac type epoxy resin, Epicron (trade name) N-740 (epoxy equivalent: 170 to 190 g/eq, manufactured by DIC Corporation), 451 g of methacrylic acid, 1.2 g of hydroquinone, and 6 g of N,N-dimethylbenzylamine were charged, and reacted with blowing air at 115±5°C for 2 hours, and thus the (meth)acrylate epoxy resin (a) obtained through the reaction had an acid value of 10 mgKOH/g. Subsequently, 0.3 g of hydroquinone and 600 g of ethylene glycol dimethacrylate as the component (b) were added thereto, and well dissolved under stirring. The curable resin component thus obtained in this manner was designated as a curable resin component (VE-1).

### [Production Example 2]

A curable resin component (VE-2) was obtained by performing the same procedures as in Production Example 1 except that 600 g of styrene was used instead of 600 g of ethylene glycol dimethacrylate.

### [Production Example 3]

In a reaction vessel, 1,043 g of a bisphenol A type epoxy resin, Araldite (trade name) AER-280 (epoxy equivalent: 280 g/eq, manufactured by Asahi Kasei E-materials Corporation), 340 g of methacrylic acid, 0.4 g of hydroquinone, and 3.3 g of N,N-dimethylbenzylamine were charged, and reacted with blowing air at 125±5°C for 2 hours, and thus the (meth)acrylate epoxy resin (a) obtained through the reaction had an acid value of 10 mgKOH/g. Subsequently, 0.3 g of hydroquinone and 900 g of styrene as the component (b) were added thereto, and well dissolved under stirring. The curable resin component thus obtained in this manner was designated as a curable resin component (VE-3).

### [Production Example 4]

In a reaction vessel, 948 g of a brominated bisphenol A type epoxy resin, Epicron (trade name) 152 (epoxy equivalent: 340 to 380 g/eq, manufactured by DIC Corporation), 451 g of methacrylic acid, 1.2 g of hydroquinone, and 6 g of N,N-diethylamine hydrochloride were charged, and reacted with blowing air at 125±5°C for 2 hours, and thus the (meth)acrylate epoxy resin (a) obtained through the reaction had an acid value of 10 mgKOH/g. Subsequently, 0.3 g of hydroquinone and 500 g of styrene as the component (b) were added thereto, and well dissolved under stirring. The curable resin component thus obtained in this manner was designated as a curable resin component (VE-4).

### [Production Example 5]

A curable resin component (VE-5) was obtained by performing the same procedures as in VE-1 except that ethylene glycol dimethacrylate as the component (b) was not used.

The formulations of the materials used in the curable resin compositions (VE-1) to (VE-5) synthesized in Production Examples 1 to 5 are shown in Table 1 below.

**Table 1**

| | | | Unit | VE-1 | VE-2 | VE-3 | VE-4 | VE-5 |
|---|---|---|---|---|---|---|---|---|
| a | Epoxy resin | Epicron N-740 | g | 948 | 948 | | | 948 |
| | | Araldite AER-280 | g | | | 1043 | | |
| | | Epicron 152 | g | | | | 948 | |
| | (Meth)acrylate | methacrylic acid | g | 451 | 451 | 340 | 451 | 451 |
| b | Polymerizable unsaturated monomer | styrene | g | | 600 | 900 | 500 | |
| | | ethylene glycol dimethacrylate | g | 600 | | | | |
| Others | Polymerization inhibitor | hydroquinone | g | 1.5 | 1.5 | 0.7 | 1.5 | 1.5 |
| | Esterification catalyst | N,N-dimethylbenzylamine | g | 6 | 6 | 3.3 | | 6 |
| | | N,N-diethylamine hydrochloride | g | | | | 6 | |
| Total | | | g | 2006.5 | 2006.5 | 2287.0 | 1906.5 | 1406.5 |
| Proportion of component a based on total | | | % by mass | 69.7 | 69.7 | 60.5 | 73.4 | 99.5 |

### [Example 1]

As shown in Table 2, to 100.0 parts by mass of the curable resin component (VE-1), 0.5 part by mass of cobalt octylate as the component (c), and 0.2 part by mass of an anionic reactive surfactant (Adeka Reasoap (trade name) SR-10, manufactured by Adeka Corporation) and 7.0 parts by mass of a nonionic reactive surfactant (Adeka Reasoap (trade name) ER-30, manufactured by Adeka Corporation, effective ingredient concentration: 65% by mass, water: remaining 35% by mass) as the component (d) were added and sufficiently stirred and mixed to provide a mixed liquid, to which 15.0 parts by mass of water as the component (e) was added dropwise at 100 mL/h, so as to prepare an oil-in-water type emulsion composition (AE-1). In the emulsion composition (AE-1), separation and the like of the surfactants from the resin component was not observed, and the emulsion was stable.

Furthermore, as shown in Table 3, with 100.0 parts by mass of the emulsion composition (AE-1), 1.0 part by mass of cobalt octylate as the component (c), 3.0 parts by mass of Permek S (ethyl methyl ketone peroxide, manufactured by NOF Corporation, effective ingredient concentration: 40% by mass) as the component (f), 127.4 parts by mass of Polysol (trade name) RX-200 (acrylic resin emulsion, manufactured by Showa Denko K.K., particle diameter: 900 nm, effective ingredient concentration: 45% by mass, water: remaining 55% by mass) as the component (g), and 0.4 part by mass of SN Defoamer 777 (manufactured by San Nopco, Ltd.) as an anti-foaming agent were mixed with a stirrer at 1,000 rpm for 5 minutes, so as to provide a curable aqueous resin emulsion composition of Example 1.

### [Examples 2 to 15 and Comparative Examples 1 to 5]

Based on the formulations shown in Tables 2 and 3, the components were stirred and mixed in the same manner as in Example 1 to provide curable aqueous resin emulsion compositions of Examples 2 to 15 and Comparative Examples 1 to 5. In all the curable aqueous resin emulsion composition after the production, separation and the like of the surfactants from the resin component was not observed, and the emulsions were stable.

As the components (f), (g), and (h), and the others in Tables 3 and 4, the following materials were used.

Component (f): Permek S (ethyl methyl ketone peroxide, manufactured by NOF Corporation, effective ingredient concentration: 40% by mass)
Component (f): Nyper (trade name) BMT-K40 (benzoyl peroxide, manufactured by NOF Corporation, effective ingredient concentration: 40% by mass)
Component (g): RX-200 (Polysol (trade name) RX-200, acrylic resin emulsion, manufactured by Showa Denko K.K., particle diameter: 900 nm, effective ingredient concentration: 45% by mass, water: remaining 55% by mass)
Component (g): CR-97 (titanium oxide CR-97, manufactured by Ishihara Sangyo Kaisha, Ltd., particle diameter: 250 nm)
Component (h): KBM-403 (3-glycidoxypropyltrimethoxysilane, manufactured by Shin-Etsu Chemical Co., Ltd.)
Component (h): TC-300 (Orgatix (trade name) TC-300, titanium lactate ammonium salt, manufactured by Matsumoto Fine Chemical Co., Ltd., effective ingredient concentration: 41% by mass, water: 19% by mass in remaining 59% by mass)
Component (h): EX-313 (Denacol (trade name) EX-313, glycerol polyglycidyl ether, manufactured by Nagase ChemteX Corporation)
Component (h): Desmodur (trade name) N (trimer of hexamethylene diisocyanate, manufactured by Sumika Covestro Urethane Co., Ltd.)
Component (h): VD-5 (2,4-diamino-6-triethoxysilane triazine, manufactured by Shikoku Chemicals Corporation)
Others: Latemul E-118B (polyoxyethylene alkyl ether sodium sulfate, manufactured by Kao Corporation, effective ingredient concentration: 25% by mass, water: remaining 75% by mass)
Others: Emulgen 1135S-70 (polyoxyethylene alkyl ether, manufactured by Kao Corporation, effective ingredient concentration: 70% by mass, water: remaining 30% by mass)

**Table 2**

| | | | Unit | AE-1 | AE-2 | AE-3 | AE-4 | AE-5 | AE-6 | AE-7 |
|---|---|---|---|---|---|---|---|---|---|---|
| a + b + others | Curable resin | VE-1 | part by mass | 100 | | | | | 100 | 100 |
| | | VE-2 | part by mass | | 100 | | | | | |
| | | VE-3 | part by mass | | | 100 | | | | |
| | | VE-4 | part by mass | | | | 100 | | | |
| | | VE-5 | part by mass | | | | | 100 | | |
| c | Curing accelerator | cobalt octylate | part by mass | 0.5 | 0.5 | 0.5 | 0.5 | 0.5 | 0.5 | 0.5 |
| d | Anionic reactive surfactant | Adeka Reasoap SR-10 | part by mass | 0.2 | 0.2 | 0.2 | 0.2 | 0.2 | 3 | |
| | Nonionic reactive surfactant | Adeka Reasoap ER-30 (65%) | part by mass | 7 | 7 | 7 | 7 | 7 | 60 | |
| e | Water | water | part by mass | 15 | 15 | 15 | 15 | 15 | 1 | 15 |
| Others | Anionic non-reactive surfactant | Latemul E-118B (25%) | part by mass | | | | | | | 0.8 |
| | Nonionic non-reactive surfactant | Emulgen 1135S-70 (70%) | part by mass | | | | | | | 6.5 |
| Total | | | part by mass | 122.7 | 122.7 | 122.7 | 122.7 | 122.7 | 164.5 | 122.8 |
| Effective ingredient concentration | | | % by mass | 85.8 | 85.8 | 85.8 | 85.8 | 85.8 | 86.6 | 85.7 |
| Proportion of component a based on total | | | % by mass | 56.8 | 56.8 | 49.3 | 59.8 | 81.1 | 42.4 | 56.8 |

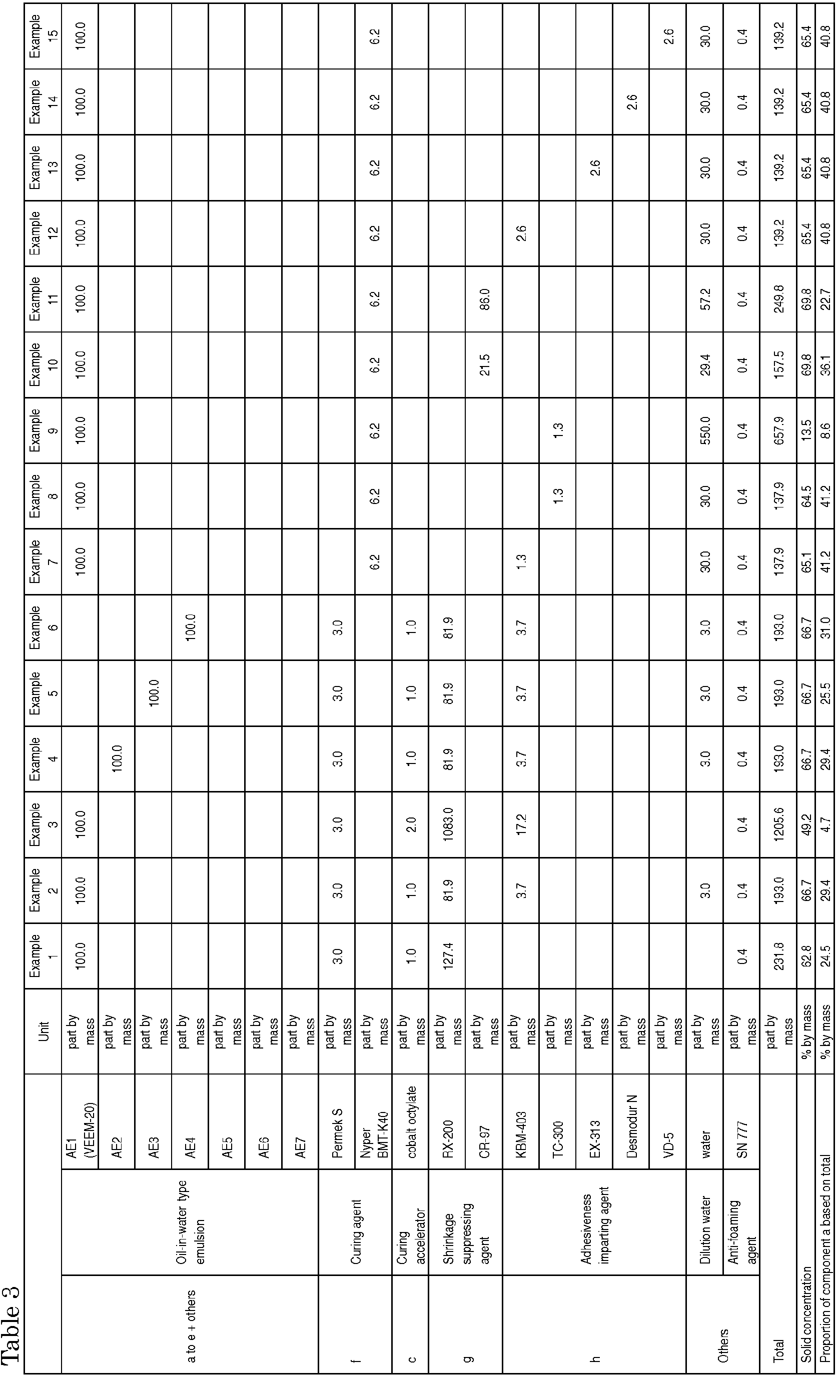

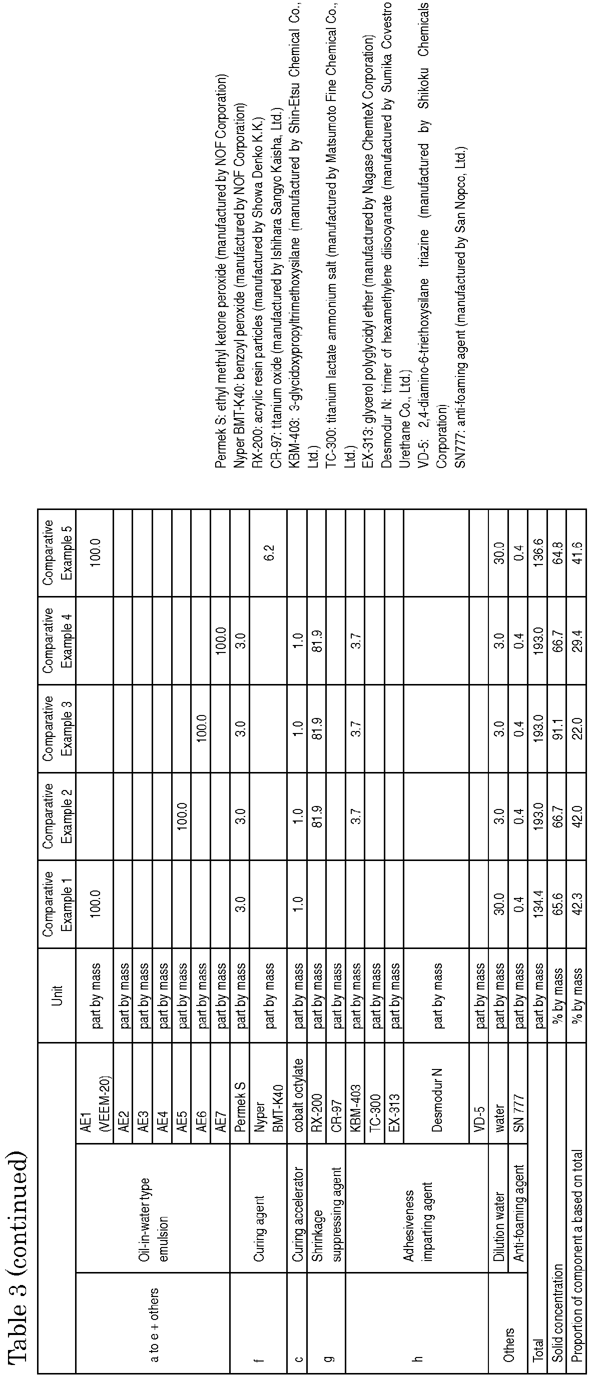

The component ratios of the components (a) to (h) calculated for the effective ingredients in the materials used in Examples 1 to 15 and Comparative Examples 1 to 5 are shown in Table 4. The water contained in the materials is calculated as the component (e).

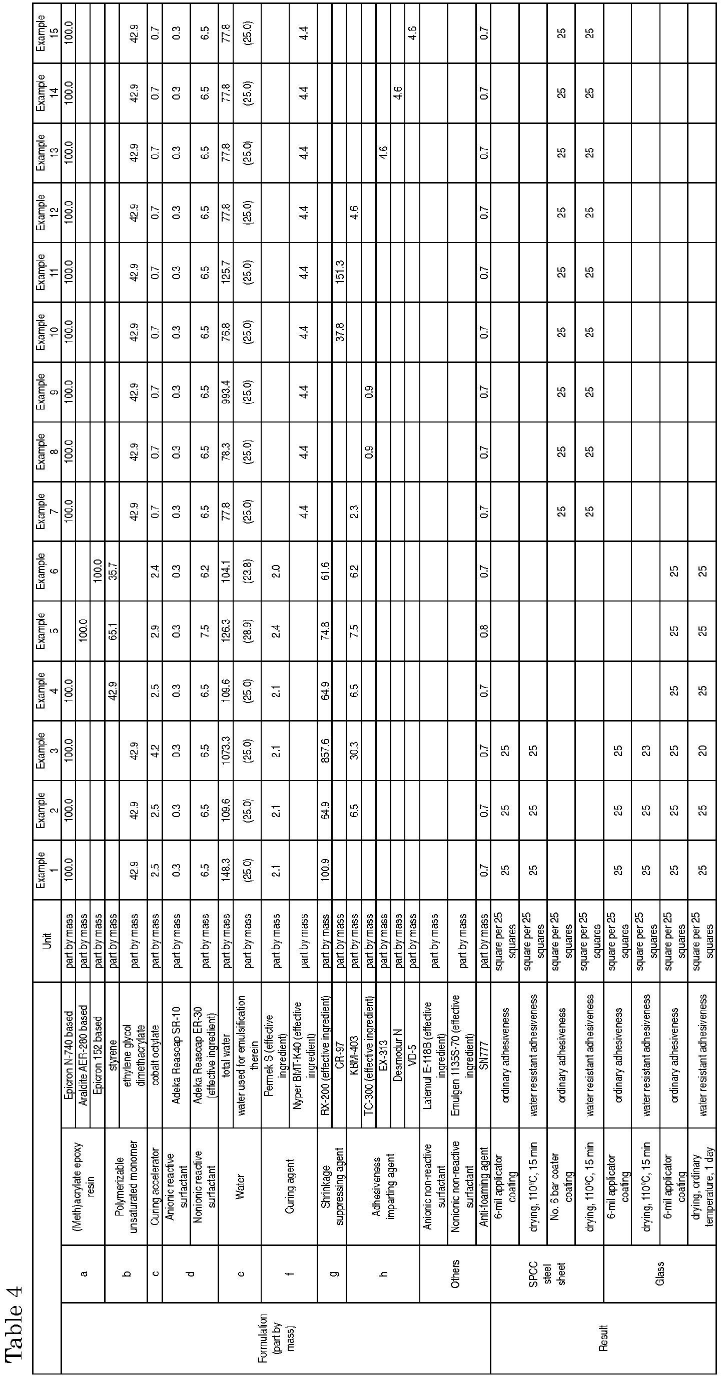

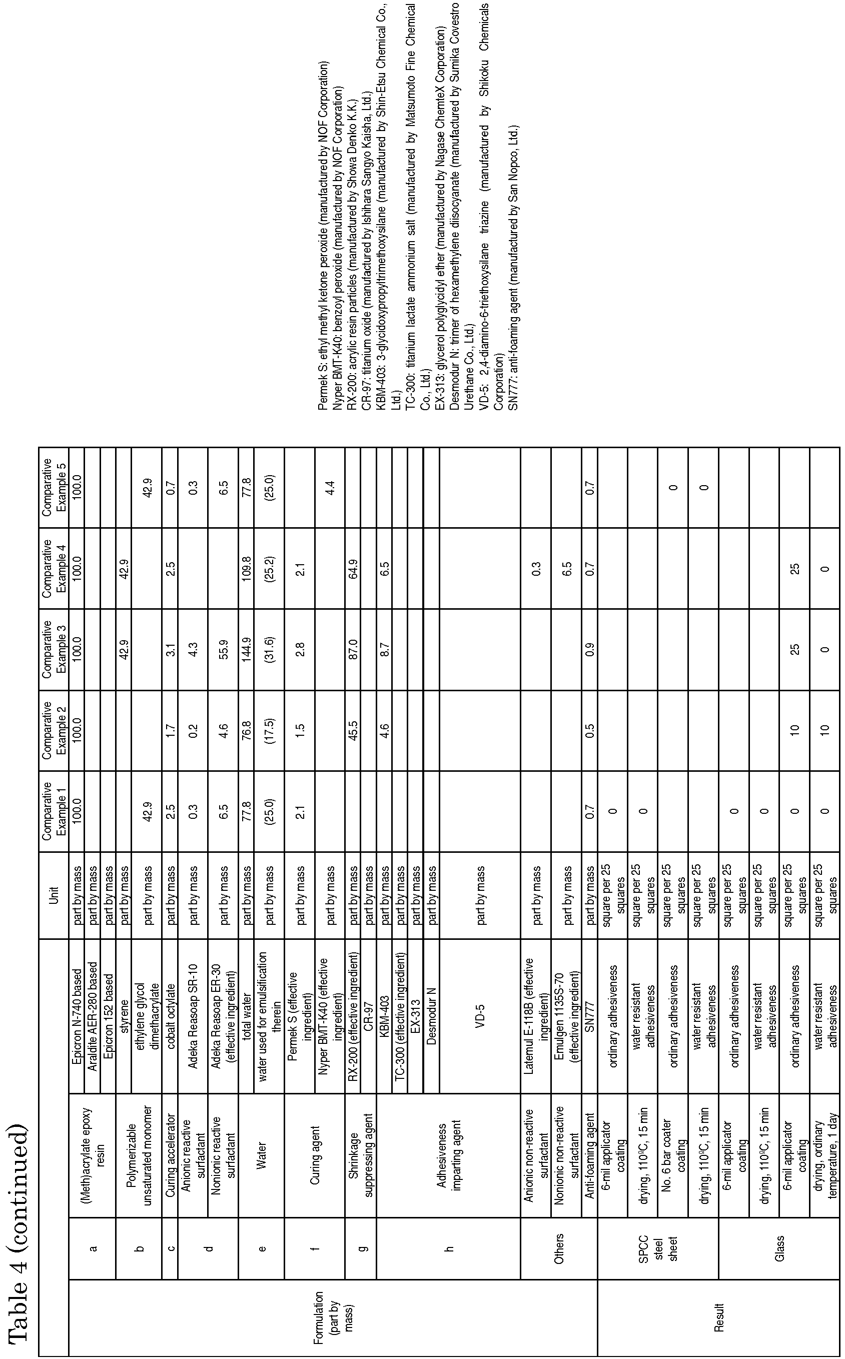

### [Adhesiveness Test]

The curable aqueous resin emulsion compositions obtained in Examples and Comparative Examples were evaluated in the following manner. The evaluation results are shown in Table 4.

### (Production of Test Piece)

A SPCC steel sheet having a degreased surface and a glass plate were used as example base materials.

In Examples 1 to 5 and Comparative Examples 1 to 4, the curable aqueous resin emulsion composition was coated with a 6-mil applicator on the base material (wet film thickness: approximately 150 µm), and aged at an ordinary temperature (23°C, 50%RH) for 24 hours, or aged in a thermostat chamber at 110°C for 15 minutes, so as to produce test pieces.

In Examples 6 to 15 and Comparative Example 5, the curable aqueous resin emulsion composition was coated with a No. 6 bar coater on the base material (wet film thickness: approximately 14 µm), and aged in a thermostat chamber at 110°C for 15 minutes, so as to produce test pieces.

### (Evaluation of Ordinary Adhesiveness)

According to JIS K5400:1990, the coated film surface of the test piece was crosscut with a space of 2 mm (25 squares), and a cellophane adhesive tape was adhered thereon. After 1 hour, the cellophane adhesive tape was removed, and the adhesiveness was evaluated by the extent of peeling. Specifically, the number of squares of the cellophane adhesive tape remaining among 25 squares was counted to evaluate the adhesiveness.

The adhesiveness test was performed after 24 hours from coating in the case of the aging at an ordinary temperature, and after allowing to stand at an ordinary temperature for 1 hour from taking out from the thermostat chamber in the case of the aging at 110°C.

### (Evaluation of Water Resistant Adhesiveness)

Immediately after the ordinary adhesiveness test, the test piece was immersed in water at an ordinary temperature for 24 hours, and immediately after taking out from water and draining water, and evaluated by performing an adhesiveness test. The test method of the water resistant adhesiveness was in accordance with the test method of the ordinary adhesiveness.

It is understood from Table 4 that the coated film obtained from the curable aqueous resin emulsion composition of Example has good adhesiveness and good water resistance.

It is understood from the comparison between Comparative Examples 1 and 5 (without the component (g) or the component (h)) and Examples that the addition of at least one of the component (g) and the component (h) improves the adhesiveness to the base material.

It is understood from the comparison between Comparative Example 2 (without the component (b)) and Examples that the addition of the component (b) in a suitable amount improves the adhesiveness to the base material.

It is understood from the comparison between Comparative Example 3 (with an excessive amount of the component (d)) and Examples that the addition of the component (d) in a suitable amount improves the water resistance.

It is understood from the comparison between Comparative Example 4 (using the non-reactive surfactant) and Examples that the use of the reactive surfactant improves the water resistance.

### Industrial Applicability

The curable aqueous resin emulsion composition of the present invention can be used in fields including a coating agent, an ink, an adhesive, a corrosion inhibitor, and a treating agent for fibers.

## Claims

1. A curable aqueous resin emulsion composition comprising:
100 parts by mass of a (meth)acrylate epoxy resin (a);
from 1 to 200 parts by mass of a polymerizable unsaturated monomer (b);
from 0.1 to 10 parts by mass of a curing accelerator (c);
from 1 to 50 parts by mass of a reactive surfactant (d);
from 10 to 2,000 parts by mass of water (e);
a radical polymerization initiator (f); and
at least one of the component (g) and the component (h) below:
(g) at least one selected from inorganic particles and organic particles, and
(h) at least one compound selected from an alkoxysilane compound, a metal alkoxy compound, a metal chelate compound, an epoxy compound, an isocyanate compound, and a triazine compound.

2. The curable aqueous resin emulsion composition according to claim 1, wherein the component (h) is at least one selected from an alkoxysilane compound, a metal alkoxy compound, and a metal chelate compound.

3. The curable aqueous resin emulsion composition according to claim 1 or 2, wherein the inorganic particles of the component (g) are particles of a metal oxide.

4. The curable aqueous resin emulsion composition according to any one of claims 1 to 3, wherein the organic particles of the component (g) are particles of a thermoplastic resin.

5. The curable aqueous resin emulsion composition according to any one of claims 1 to 4, wherein a content of the component (g) is 2,000 parts by mass or less relative to 100 parts by mass in total of the components (a) to (d).

6. The curable aqueous resin emulsion composition according to any one of claims 1 to 5, wherein a content of the component (h) is 20 parts by mass or less relative to 100 parts by mass in total of the components (a) to (d), the component (f), and the component (g).

7. The curable aqueous resin emulsion composition according to any one of claims 1 to 6, wherein the component (d) is at least one selected from an ionic reactive surfactant and a nonionic reactive surfactant.

8. The curable aqueous resin emulsion composition according to claim 7, wherein the component (d) contains an ionic reactive surfactant and a nonionic reactive surfactant.

9. A method for producing the curable aqueous resin emulsion composition according to any one of claims 1 to 8, comprising:
adding dropwise the component (e) to a mixed liquid containing the components (a) to (d) to provide an oil-in-water type emulsion through phase inversion emulsification; and
mixing the oil-in-water type emulsion with at least one of the component (g) and the component (h); and the component (f) which have been mixed and dispersed in water in advance to form a water dispersion state.

10. A coating agent comprising the curable aqueous resin emulsion composition according to any one of claims 1 to 8.

11. An adhesive comprising the curable aqueous resin emulsion composition according to any one of claims 1 to 8.

12. A composition for a binder, comprising the curable aqueous resin emulsion composition according to any one of claims 1 to 8.

13. A structure comprising the coating agent according to claim 10.

14. A structure comprising the adhesive according to claim 11.

15. A structure comprising the composition for a binder according to claim 12.
